# EUROPEAN PATENT APPLICATION

(11) **EP 0 903 072 A1**
(43) Date of publication of application: **24.03.1999**
(21) Application number: 98114888.5
(22) Date of filing: 07.08.1998
(51) Int. Cl.: A01D 34/64

(54) **Seated-driver easily handled low-steering angle mowing machine**

(30) Priority: 27.08.1997 IT MI970621 U
(71) Applicant: HARRY S.p.A., I-20062 Cassano D'Adda (IT)
(72) Inventor: Soldavini, Vittorio, 20043 Arcore, Milano (DE)
(74) Representative: Cicogna, Franco

(57) **Abstract**

The invention relates to a garden mowing machine, of the seated-driver type, including a driving transmission (70) on the two rear wheels (50) thereof. The main feature of the invention is that the two steering front wheels (30) are closely spaced and, as they are steered, they turn about a vertical axis, or a slightly to the vertical slanted axis, thereby allowing the mowing machine to be easily handled owing to the thus obtained reduced steering angle.

## Description

### BACKGROUND OF THE INVENTION

The present invention relates to a seated-driver easily handled low-steering angle mowing machine.

As is known, mowing machines of the seated-driver type are at present increasingly used.

On the other hand, the above mentioned mowing machine are required to have a high performance and to be easily handled, in order to be used even in gardens of middle size and with comparatively uneven surfaces.

### SUMMARY OF THE INVENTION

Accordingly, the aim of the present invention is to provide a seated-driver type of mowing machine which can be driven in reduced spaces, while moving on bends with a small bending radius and which, in particular, is adapted to reverse the motion or driving direction thereof with a small bending radius.

The above aim is achieved by the present invention, which provides a garden mowing machine, of the seated-driver type, including on the two rear wheels a driving transmission and being characterized in that the two front steering wheels of said mowing machine are closely spaced to one another and, as they are steered, turn about a vertical axis, or an axis slightly slanted with respect to the vertical direction.

According to a preferred embodiment of the present invention, the front steering wheels can be rotatively driven directly by the steering or direction wheel of the mowing machine.

Alternately, it is also possible to use a r.p.m.'s reducing unit, designed for rotatively driving the front steering wheels.

Moreover, the mowing machine according to the invention comprises limiting means for limiting the mowing machine steering angle, both from the right and from the left side thereof.

Thus, a mowing machine adapted to be easily used even in small size gardens, including narrow passages is provided.

Furthermore, the mowing machine according to the invention can be easily handled or driven in order to bypass different obstacles, such as blocks, tree trunks, decorating elements and the like, as encountered on the driving path of said mowing machine.

### BRIEF DESCRIPTION OF THE DRAWINGS

Further advantages and characteristics of the present invention will become more apparent from the following disclosure with reference to the accompanying drawings, where:
Figure 1 is a schematic side view illustrating a seated-driver mowing machine according to the present invention;

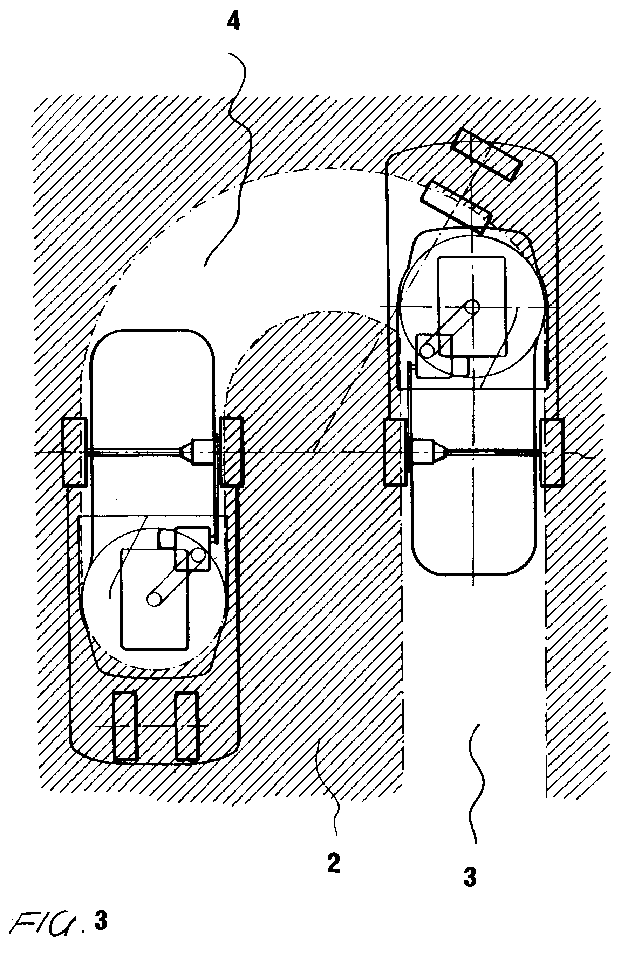

Figure 2 is a schematic top plan view illustrating that same mowing machine; and
Figure 3 illustrates the positions assumed by the subject seated-driver mowing machine at the start and end of a 180° steering operation.

### DESCRIPTION OF THE PREFERRED EMBODIMENT

In the following disclosure a preferred embodiment of the present invention, shown by way of an illustrative but not limitative example of several variations thereof, will be disclosed.

More specifically, the disclosure will disclose the subject matter of the present invention, comprising a garden seated-driver mowing machine, including front steering wheels, rear driving wheels and a grass cutting assembly arranged between the two mentioned wheel pairs.

In order to provide an easily handled or driven mowing machine, the present invention provides for using a pair of front steering wheels 30, mounted on a supporting column, which is directly rotatively driven about a vertical axis (or an axis slightly slanted from the vertical direction) by the mowing machine steering or direction wheel, or being driven through a suitable r.p.m.'s reduction unit.

The wheels of the pair of front steering wheels 30 are closely spaced from one another to allow an easy steering operation.

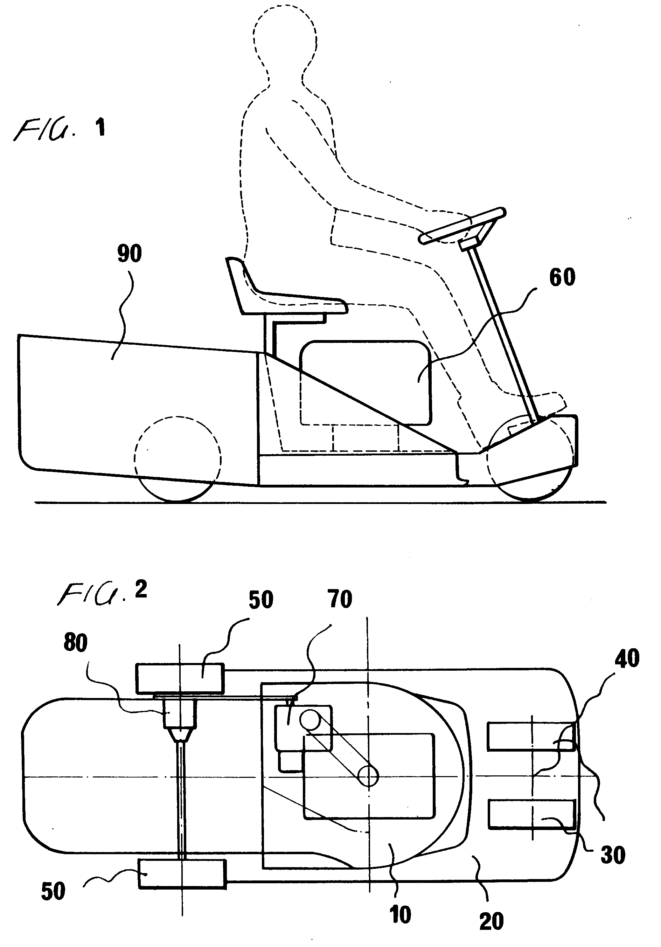

With reference to the number references of the accompanying drawings, figure 1 illustrates the mowing machine 10 and the main components thereof, i.e.: the mowing machine body 20, the front steering wheels 30, which are rotatively driven as an assembly about the rotary axis 40 thereof, during the steering operations.

The rear driving wheels 50 are rotatively driven by the engine 60, through the speed transmission 70 and the differential assembly 80.

From said differential assembly 80 the two half-shafts driving the wheels 50 are extended.

On the rear portion of the mowing machine a collecting basket 90 can be supported, in order to collect the grass cut by the rotary blade and thrown by said blade into the grass basket, and this by specifically designing the casing or carter of the mowing machine 10.

Figure 3 shows the position assumed by the seated-driver mowing machine at the start and end of a 180° steering operation, as well as the very narrow not cut glass strip 2 included between the there and back paths 3 and 4, respectively.

The strip 2 is very narrow owing to the high steering capability assured by the specifically designed front axle, as disclosed.

The subject mowing machine can also comprise steering angle limiting means for limiting both the leftward and rightward steering angle, in order not to damage the grass surface under a maximum steering angle of the mowing machine.

In particular, the maximum steering angle, both leftward and rightward, can be advantageously limited to a value not greater than 60°.

## Claims

1. A garden mowing machine, of a seat-driver type, and including driving transmission means on the two rear wheels thereof, characterized in that the two front steering wheels of said mowing machines are closely spaced from one another and, as the mowing machine is steered, said front steering wheels turning about a vertical axis or an axis slightly slanted with respect to a vertical direction.

2. A mowing machine according to Claim 1, characterized in that said front steering wheels are directly rotatively driven by the steering or direction wheel of said mowing machine.

3. A mowing machine according to Claim 1, characterized in that said mowing machine comprises moreover a r.p.m.'s reduction unit for rotatively driving said front steering wheels.

4. A mowing machine according to one or more of the preceding claims, characterized in that said mowing machine comprises moreover means for limiting the steering angle thereof, both rightwardly and leftwardly.

5. A mowing machine according to Claim 4, characterized in that said steering angle limiting means are so designed as to limit the steering angle to a value not greater than 60°, both rightwardly and leftwardly.

6. A mowing machine according to one or more of the preceding claims, and substantially as broadly disclosed and illustrated and for the intended aim.
